Europäisches Patentamt

European Patent Office

Office européen des brevets

(11) Publication number: **0 155 764**
**A1**

## (12) EUROPEAN PATENT APPLICATION

(21) Application number: **85301003.1**

(22) Date of filing: **15.02.85**

(51) Int. Cl.⁴: **B 60 R 19/02**

(30) Priority: **02.03.84 GB 8405553**

(43) Date of publication of application:
**25.09.85 Bulletin 85/39**

(84) Designated Contracting States:
**BE CH DE FR GB IT LI SE**

(71) Applicant: **FORD MOTOR COMPANY LIMITED**
**Eagle Way**
**Brentwood Essex CM13 3BW(GB)**

(84) Designated Contracting States:
**BE CH GB IT LI SE**

(71) Applicant: **FORD-WERKE AKTIENGESELLSCHAFT**
**Ottoplatz 2 Postfach 21 03 69**
**D-5000 Köln 21(DE)**

(84) Designated Contracting States:
**DE**

(71) Applicant: **FORD FRANCE SOCIETE ANONYME**
**344 Avenue Napoléon Bonaparte B.P. 307**
**F-92506 Rueil Malmaison Cedex(FR)**

(84) Designated Contracting States:
**FR**

(72) Inventor: **Lewis, Idris**
**42 Downham Road**
**Ramsden Heath Essex(GB)**

(72) Inventor: **Parkes, Ronald Alfred**
**21 The Warren**
**Billericay Essex(GB)**

(72) Inventor: **Churchill, John I.**
**28 Chelmsford Avenue**
**Southend Essex(GB)**

(74) Representative: **Messulam, Alec Moses et al,**
**A. Messulam & Co. 24 Broadway**
**Leigh on Sea Essex SS9 1BN(GB)**

(54) Height adjustable vehicle bumper assembly.

㊸ A box section plastics bumper 14 is formed with recesses 28 in its inner wall 12 which receive height adjusters 24 accessible through apertures 68 in the lower wall of the bumper structure 14.

EP 0 155 764 A1

./...

Croydon Printing Company Ltd.

FIG. 2.

0155764

## HEIGHT ADJUSTABLE VEHICLE BUMPER ASSEMBLY

This invention relates to vehicle bumper assemblies and particularly to bumper assemblies comprising a box section structure of moulded plastics material.

A mounting system for a bumper assembly of this kind is described in our UK Patent Specification No. 8233491. As explained in that specification, it is important for moulded plastic bumpers to fit closely to the associated body contours of the vehicle. Unsightly gaps between the vehicle sheet metal or radiator grill and the bumper spoil the appearance of the vehicle.

A known height adjustment means for a bumper used vertical slots in the bumper supporting arms so that adjustment can be affected by loosening the bolt for mounting the bumper structure on the support arm, connecting the supporting arms to the rear wall of the bumper structure, moving the bumper up or down as required and re-tightening the bolt.

Accessibility of the bolts is a problem. One solution is to provide apertures in the front wall of the bumper structure but these must be closed by inserts to preserve the appearance of the vehicle.

According to the present invention, there is provided a vehicle bumper assembly comprising an outer channel section member of moulded plastics material, an inner member secured along its longitudinal edges to the outer member to form therewith a box section structure, and a plurality of spaced apart supporting arms each connected at one end to the inner member and adapted to be fixed at the other end to the vehicle, wherein each supporting arm is connected to a height adjuster device mounted within a respective recess formed in the inner member and extending into the interior of the box section structure; and each height adjuster device is operable through an aperture in the lower surface of the outer member for adjustment of the height of the box section structure relative to the respective supporting arm.

The invention will now be described further, by way of example, with reference to the accompanying drawings, in which:

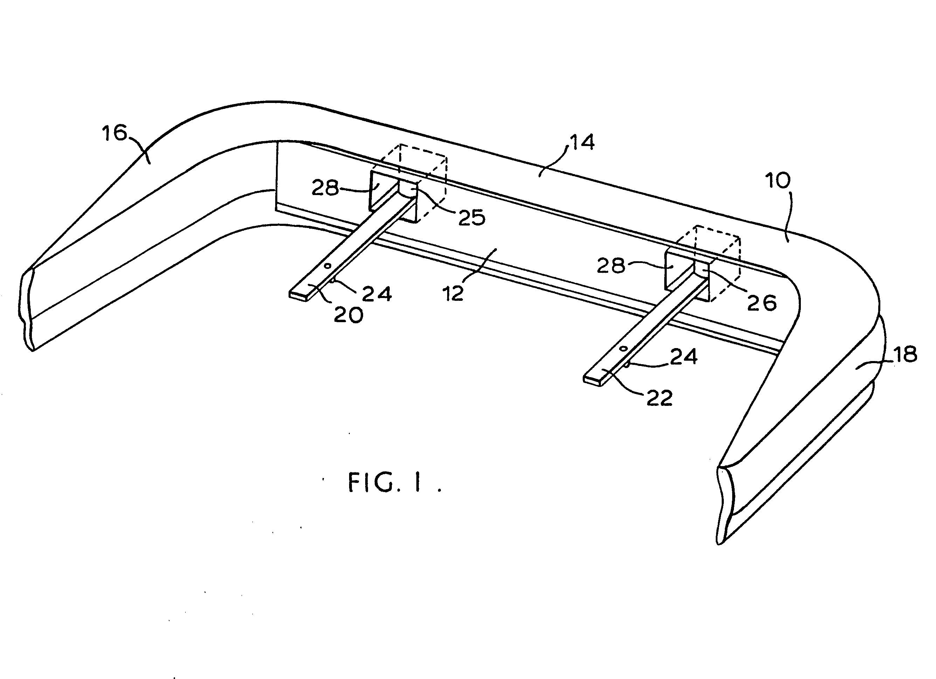

.Figure 1 is a perspective view from the rear of a motor vehicle front bumper embodying the invention; and

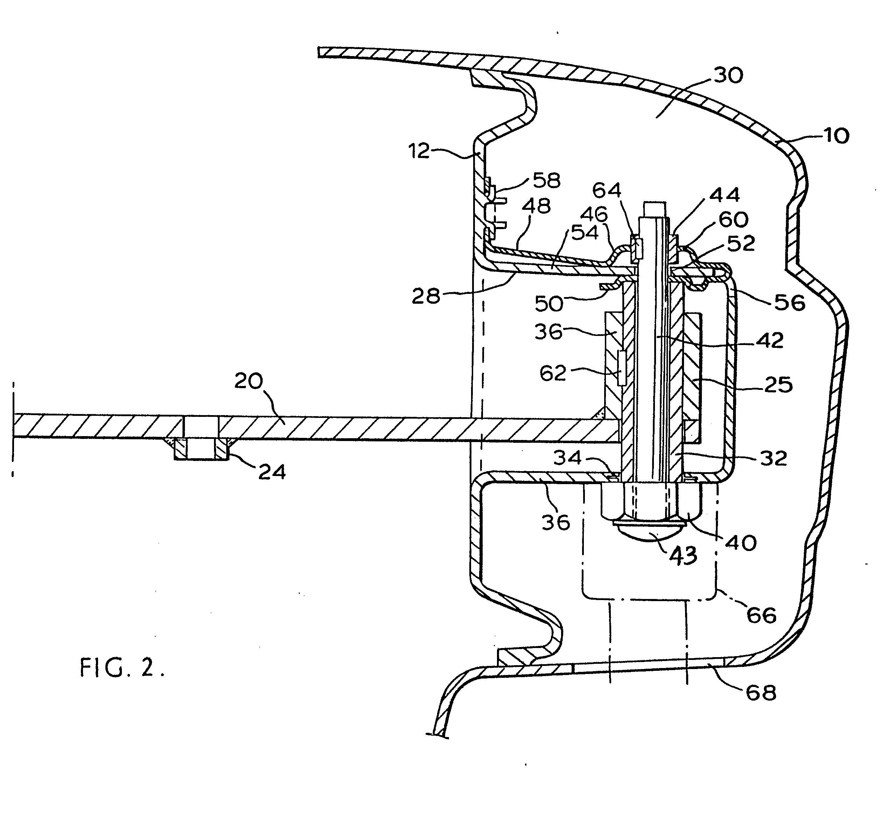

Figure 2 is a vertical section along one of the supporting arms of the bumper assembly shown in Figure 1.

The bumper assembly of the invention comprises an outer channel shaped member 10 of moulded plastics material frictionally welded to an inner member 12 of moulded plastics retained therein to form box a section structure having sufficient strength when properly supported on a vehicle to provide a functionally effective bumper of pleasing appearance.

The bumper has a transversely extending box section portion 14 and integrally formed rearwardly extending end portions 16 and 18. The method of making the bumper and the mounting means for the end portions 16 and 18 are more fully described in our UK Patent Specification No. 8211491.

The box section portion 14 of the bumper is mounted on supporting arms 20 and 22 adapted to be fixed to the vehicle body structure by weld nuts 24.

Each supporting arm 20, 22 is connected to the box section portion 14 by a respective height adjuster device 25, 26. One of these devices 25 will now be described with reference to Figure 2, the other device 26 being identical.

Height adjuster device 25 is located in a box shaped recess 28 formed in the inner member 12 and extending into the interior 30 of the box section portion 14. A hollow bolt 32 extends through an aperture 34 in the lower wall 36 of the box recess 28 into threaded engagement with an internally threaded sleeve 38 fixed to the forward end of supporting arm 20. The head 40 of the bolt 32 engages the underside of the recess 28 and supports the bumper structure.

A threaded retaining member 42 having a head 43 extends through the interior of the bolt 32, through an aperture 52 in the upper wall 54 of the recess 28, and is screwed into a pierce nut 44 fixed to a spring clip 46 having two legs 48, 50 which embrace the upper wall 54.

The spring clip is inserted through an aperture 56 in the base of the recess 28 prior to assembly of the inner member 12 with the outer member 10. The longer leg 48 is secured to the inner member by heat stake 58.

The shorter leg 50 of the spring clip forms a metal seat for the upper end of bolt 32 and a dome shaped portion 60 of the longer leg 48 supports the pierce nut 44. When the head 43 of the retaining member 42 is turned to screw the latter into place, the dome shaped portion 60 is deflected and maintains the bolt 32 and retaining member 42 is rattle free assembly even in the event of creep occuring in the plastics material forming the recess 28. Inserts 62 and 64 ensure that vibration in service does not loosen the retaining member 42 or move the bolt 32.

An aperture 68 in the lower wall of the outer member 10 visible only from below bumper level, allows a tool 66 to be inserted for rotating bolt 32 to operate the height adjuster device. As the bolt 32 is turned the supporting sleeve 38 moves along the bolt thereby adjusting the height of the bumper structure relative to the vehicle body structure.

CLAIMS

1. A vehicle bumper assembly comprising an outer channel section member (10) of moulded plastics material, an inner member (12) secured along its longitudinal edges to the outer member (10) to form therewith a box section structure (14), and a plurality of spaced apart supporting arms (20,22) each connected at one end to the inner member (12) and adapted to be fixed at the other end to the vehicle, characterised in that

a) each supporting arm (20,22) is connected to a height adjuster device (25,26) mounted within a respective recess (28) formed in the inner member (12) and extending into the interior of the box section structure (14); and

b) each height adjuster device (25,26) is operable through an aperture (68) in the lower surface of the outer member (10) for adjustment of the height of the box section structure (14) relative to the respective supporting arm (20,22).

2. A bumper assembly as claimed in Claim 1, wherein each height adjuster device comprises a bolt extending through an aperture in the lower wall of the respective recess and through a threaded sleeve fixed to the end of the respective supporting arm, the head of the bolt being located below the recess so that it is accessible through a respective aperture in the outer member.

3. A bumper assembly as claimed in Claim 2, wherein each bolt has an axial bore which receives a retaining member, the retaining member having a head at its lower end to retain the bolt and being secured at its upper end to the upper wall of the respective recess.

4.    A bumper assembly as claimed in Claim 3, wherein each retaining member is screwed into a nut mounted on the upper wall of the respective recess.

5.    A bumper assembly as claimed in Claim 4, wherein each nut it secured to the upper wall of the respective recess by a spring clip embracing the upper wall and inserted through an aperture in the base of the respective recess prior to assembly of the inner member with the outer member.

6.    A bumper assembly as claimed in Claim 5, wherein the spring clip is heat staked to the inner member.

7.    A bumper assembly as claimed in any one of the preceding claims, wherein the inner and outer members are of moulded plastics material connected together by friction welding.

FIG. I.

FIG. 2.

0155764

# EUROPEAN SEARCH REPORT

**European Patent Office**

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | DE-A-2 903 542 (DAIMLER-BENZ)<br>* Claims; figures 1-3 * | 1-4 | B 60 R 19/02 |
| | --- | | |
| X | DE-A-2 509 718 (VOLKSWAGEN)<br>* Claims; figures * | 1,2 | |
| | --- | | |
| D,A | GB-A-2 118 489 (FORD) | | |
| | --- | | |
| A | US-A-3 731 961 (BECKER) | | |
| | ----- | | |

**TECHNICAL FIELDS SEARCHED (Int. Cl.4)**

B 60 R

The present search report has been drawn up for all claims

| Place of search | Date of completion of the search | Examiner |
|---|---|---|
| THE HAGUE | 31-05-1985 | PIRIOU J.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO Form 1503 03.82